# DEMANDE DE BREVET EUROPEEN

(11) **EP 4 759 206 A1**
(43) Date de publication de la demande: **17.06.2026**
(21) Numéro de dépôt: 25220664.4
(22) Date de dépôt: 04.12.2025
(51) Int. Cl.: A47J 31/44

(54) **DISPOSITIF DE MOUSSAGE DE LAIT COMPRENANT UNE BUSE D'ALIMENTATION ET UN BOITIER**

(30) Priorité: 12.12.2024 FR 2413960
(71) Demandeur: SEB S.A., 69130 Ecully (FR)
(72) Inventeur: BENESTEAU, Pascal, 69134 ECULLY CEDEX (FR); HIRON, Frédéric, 69134 ECULLY CEDEX (FR)
(74) Mandataire: SEB Développement

(57) **Abrégé**

La présente divulgation concerne un dispositif de moussage de lait, comprenant une buse d'alimentation en lait (1) et un corps de moussage (2) comprenant :
- un port d'amenée de vapeur et/ou d'eau chaude (4),
- un port d'amenée d'air (3), et
- un port d'amenée de lait (10),
la buse d'alimentation (1) en lait comprenant :
- une portion principale, et
- une fente d'amenée d'air s'étendant entre une extrémité amont et une extrémité aval, la surface externe de la portion principale comprenant un orifice d'injection d'air dans le conduit de distribution de lait sur lequel débouche l'extrémité aval,
la surface interne du port d'amenée de lait (10) comprenant une nervure configurée pour coulisser dans la fente d'amenée d'air de sorte à déloger du lait séché présent dans la fente d'amenée d'air.

## Description

### DOMAINE TECHNIQUE

La présente demande concerne le domaine des dispositifs de moussage de lait par mélange de lait non moussé et d'air.

### ETAT DE LA TECHNIQUE

Des dispositifs de moussage de lait comprennent un boîtier de moussage de lait dans lequel peut être insérée, au niveau d'un port de lait, une buse reliée à une alimentation en lait. Le boîtier comprend en outre un port auquel est reliée une alimentation en air, et une alimentation en vapeur. Lors d'une utilisation du dispositif, l'air et le lait sont entraînés ensemble par effet Venturi sous l'action de la vapeur dans une chambre de moussage, dans laquelle ils sont mélangés de sorte à produire un lait moussé.

Il existe de tels dispositifs pour lesquels la buse qui alimente le boîtier de moussage de lait accueille également l'air, de sorte que le lait et l'air peuvent être amenés ensemble vers la chambre de moussage. Une rainure prévue dans une surface externe de la buse permet le passage de l'air le long de la surface externe, puis vers l'intérieur de la buse, l'air étant alors mélangé au lait et acheminé avec celui-ci vers la chambre de moussage à travers l'intérieur de la buse. La section de la rainure détermine le débit d'air acheminé vers l'intérieur de la buse puis vers la chambre de moussage. Il est donc important de s'assurer que cette section ne change pas au fil des utilisations de sorte à obtenir un lait moussé avec une texture uniforme et de la meilleure qualité possible.

Or, lors de certaines utilisations du dispositif de moussage de lait, du lait peut retourner vers la buse depuis la chambre de moussage, et notamment passer dans la rainure. Une fois séché, ce lait se solidifie et obture la rainure, et réduit le débit d'air pouvant circuler dans la rainure, voire empêche tout passage d'air dans la rainure. Un utilisateur peut nettoyer manuellement la rainure après avoir dégagé la buse du port de lait. Toutefois, un tel nettoyage reste fastidieux et est rarement suffisant pour dégager tout le lait solidifié de la rainure, dont la section faible rend l'accès difficile à l'utilisateur, et la rainure reste partiellement obturée dès lors qu'un tel nettoyage n'est pas effectué avec une minutie particulière.

### EXPOSE

Il existe donc un besoin pour un dispositif de moussage de lait qui permet un nettoyage plus efficace et moins complexe de la rainure prévue dans la buse pour le passage de l'air.

À cet effet, il est proposé un dispositif de moussage de lait, comprenant une buse d'alimentation en lait et un corps de moussage, le corps de moussage comprenant :
- un port d'amenée de vapeur et/ou d'eau chaude,
- un port d'amenée d'air, et
- un port d'amenée de lait, configuré pour recevoir la buse d'alimentation en lait, le port d'amenée d'air débouchant sur une surface interne du port d'amenée de lait,
la buse d'alimentation en lait comprenant :
- une portion principale définissant un conduit de distribution de lait, et
- une fente d'amenée d'air s'étendant sur au moins une partie d'une surface externe de la portion principale, entre une extrémité amont et une extrémité aval selon un sens normal de passage de l'air dans la fente d'amenée d'air lors du fonctionnement du dispositif de moussage de lait, la surface externe de la portion principale comprenant un orifice d'injection d'air dans le conduit de distribution de lait sur lequel débouche l'extrémité aval, la surface interne du port d'amenée de lait comprenant une nervure configurée pour coulisser dans la fente d'amenée d'air, entre l'extrémité amont et l'extrémité aval lors d'une insertion ou d'un retrait de la buse d'alimentation en lait du port d'amenée de lait, de sorte à déloger du lait séché présent dans la fente d'amenée d'air.

La nervure permet un nettoyage de la fente d'amenée d'air lors de tout mouvement d'insertion ou de retrait de la buse d'alimentation en lait dans la fente. Il n'est donc pas nécessaire à l'utilisateur de nettoyer manuellement la fente - notamment, l'action de retrait, qui serait de toute manière nécessaire avant un nettoyage manuel de la fente, suffit à déloger le résidu de lait séché présent dans la fente. Il en découle un gain de temps pour l'utilisateur, et un nettoyage plus en profondeur et plus efficace de la fente, assurant un débit d'air constant à travers la fente et une qualité uniforme et optimale du lait moussé.

Selon certains modes de réalisation, la surface externe de la portion principale comprend en outre un logement situé en aval de l'extrémité aval et configuré pour recevoir la nervure à la fin d'une course de coulissement de la nervure dans la fente d'amenée d'air lors de l'insertion de la buse d'alimentation en lait dans le port d'amenée de lait.

Selon certains modes de réalisation, le logement a une profondeur supérieure ou égale à une profondeur de la fente d'amenée d'air et/ou le logement a une épaisseur supérieure ou égale à une épaisseur de la fente d'amenée d'air.

Selon certains modes de réalisation, le logement et la fente d'amenée d'air sont situés de part et d'autre de l'orifice d'injection d'air.

Selon certains modes de réalisation, le logement a une épaisseur supérieure ou égale à une épaisseur de la nervure et/ou une profondeur supérieure ou égale à celle de la nervure.

Selon certains modes de réalisation, le port d'amenée de lait est configuré pour recevoir la buse d'alimentation en lait de manière étanche.

Selon certains modes de réalisation, le port d'amenée de vapeur et/ou d'eau chaude est apte à être relié fluidiquement à une sortie de vapeur et/ou d'eau chaude d'un appareil de distribution de boisson, notamment d'une machine à café.

Selon certains modes de réalisation, le corps de moussage comprend un logement apte à recevoir un outil de nettoyage configuré pour nettoyer le conduit de distribution de lait et/ou la fente d'amenée d'air.

Selon certains modes de réalisation, le corps de moussage comprend :
- une chambre de moussage reliée fluidiquement au port d'amenée de vapeur et/ou d'eau chaude et au port d'amenée de lait, et
- une sortie de lait moussé,
un orifice de sortie de la buse d'alimentation en lait étant propre à déboucher dans la chambre de moussage après connexion de la buse d'alimentation en lait au port d'amenée de lait

Selon certains modes de réalisation, le dispositif de moussage de lait comprend un module de sortie propre à être connecté au corps de moussage, le module de sortie comprenant deux buses de distribution de lait moussé propre à être chacune reliée fluidiquement à la sortie de lait moussé.

Il est proposé, selon un deuxième aspect, un système de moussage de lait comprenant un dispositif de moussage de lait tel que défini ci-dessus et un pot destiné à recevoir du lait, un volume interne du pot étant propre à être fluidiquement relié à la buse d'alimentation.

Il est proposé, selon un troisième aspect, un appareil de distribution de boisson, comprenant une sortie de vapeur et/ou d'eau chaude et un dispositif de moussage de lait tel que défini précédemment, le port d'amenée de vapeur et/ou d'eau chaude étant configuré pour être connecté à la sortie de vapeur et/ou d'eau chaude.

Selon certains modes de réalisation, l'appareil de distribution de boisson comprend une tête de distribution de boisson dans un récipient, la tête de distribution de boisson formant un réceptacle dans lequel débouche la sortie de vapeur et/ou d'eau chaude, le dispositif de moussage de lait étant reçu dans le réceptacle lorsque le port d'amenée de vapeur et/ou d'eau chaude est connecté à la sortie de vapeur et/ou d'eau chaude.

Selon certains modes de réalisation, la buse d'alimentation en lait est insérée dans le port d'amenée de lait et comprend une entrée reliée fluidiquement à un pot destiné à recevoir du lait disposé en dehors d'un bâti de l'appareil de distribution de boisson.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
[Fig. 1] représente un dispositif de moussage de lait selon un mode de réalisation de l'invention.
[Fig. 2] représente un appareil de distribution de boisson comprenant une sortie de vapeur et/ou d'eau chaude et le dispositif de moussage de lait de la figure 1.
[Fig. 3] représente une buse d'alimentation en lait du dispositif de moussage de lait de la figure 1.
[Fig. 4] représente un corps de moussage du dispositif de moussage de lait de la figure 1.

Sur l'ensemble des figures, les éléments similaires portent des références identiques.

### DESCRIPTION DÉTAILLÉE DE MODES DE RÉALISATION

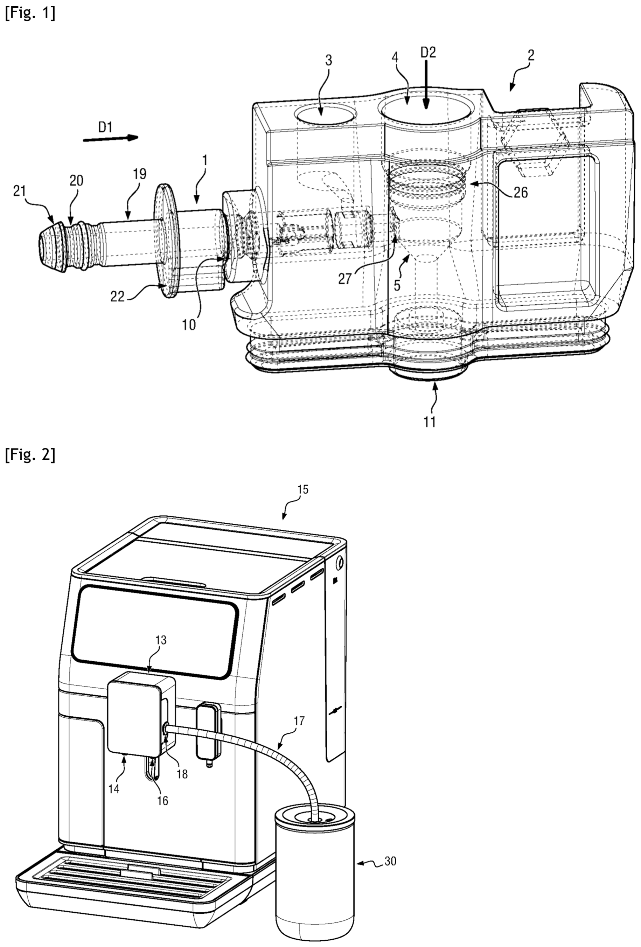

Un dispositif de moussage de lait représenté sur la figure 1 comprend une buse d'alimentation en lait 1 ainsi qu'un corps de moussage 2, configurés pour coopérer dans une configuration assemblée dans laquelle la buse d'alimentation 1 est insérée dans un port d'amenée de lait 10 du corps de moussage 2. Le dispositif de moussage, dans sa configuration assemblée, est prévu pour être intégré dans un appareil de distribution de boisson 15 représenté sur la figure 2. Notamment, le dispositif de moussage peut servir à la production de lait moussé dans un appareil de distribution de café.

La figure 2 illustre un tel appareil de distribution de boisson 15. L'appareil de distribution 15 comprend une tête de distribution 13 prévue pour recevoir le dispositif de moussage de lait.

Le dispositif de moussage de lait comprend au moins une sortie de distribution de lait moussé 16 prévue pour permettre une distribution de lait vers un récipient situé en dessous de la tête de distribution 13, cette sortie de distribution de lait moussé 16 étant reliée à une sortie de lait moussé 11 prévue dans le corps de moussage 2. L'appareil de distribution 15 peut également comprendre des sorties 14 d'une boisson préparée par l'appareil de distribution de boisson lorsque cette boisson est autre que le lait.

Selon un mode de réalisation, l'appareil de distribution 15 est un appareil de distribution de café, et la tête de distribution 13 comprend le dispositif de moussage de lait muni de la sortie de distribution de lait 16 ainsi qu'une sortie de distribution de café 14, voire deux sorties de distribution de café 14 de sorte à permettre le remplissage simultané de deux récipients avec du café. Avantageusement, la sortie de distribution de lait 16 est également munie de deux buses de distribution de lait moussé.

Le dispositif de moussage, lorsqu'il est assemblé au sein de la tête de distribution 13, est également apte à être relié à un pot à lait 30 prévu pour contenir du lait non moussé. Le pot 30 est avantageusement situé en dehors d'un bâti de l'appareil de distribution 15 et est relié à la buse d'alimentation en lait 1 via une conduite d'amenée de lait 17, la conduite traversant un orifice de passage 18 d'un bâti de la tête de distribution 13.

La conduite d'amenée de lait 17 présente une première extrémité reliée au corps de moussage 2, via la buse d'alimentation en lait 1, ainsi qu'une deuxième extrémité opposée à la première extrémité, la deuxième extrémité étant apte à être insérée dans un volume interne du pot 30.

Selon certains modes de réalisation, le dispositif de moussage peut être assemblé à un pot à lait 30 indépendamment de, ou avant, une insertion du dispositif de moussage dans la tête de distribution 13.

L'appareil de distribution de boisson 15 comprend en outre une sortie de vapeur et/ou d'eau chaude apte à alimenter le dispositif de moussage. Le corps de moussage 2 comprend un port d'amenée de vapeur et/ou d'eau chaude 4 apte à être relié fluidiquement à la sortie de vapeur et/ou d'eau chaude de l'appareil de distribution 15. La sortie de vapeur et/ou d'eau chaude débouche notamment dans la tête de distribution 13.

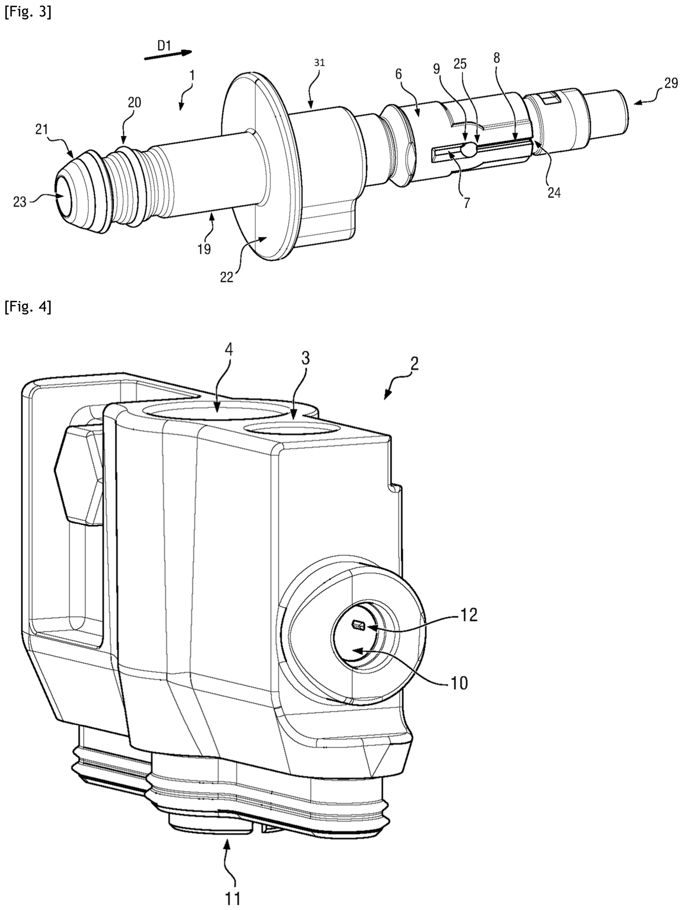

La buse d'alimentation en lait 1, illustrée en détail sur la figure 3, comprend une portion principale 6 sensiblement cylindrique et traversée de part en part par un conduit de distribution de lait. La portion principale 6 comprend une extrémité d'entrée 19 avec un orifice d'entrée 23 du conduit de distribution de lait et une extrémité de sortie 31 avec un orifice de sortie 29 du conduit de distribution de lait.

Une fente d'amenée d'air 8 s'étend parallèlement à une direction d'insertion D1 de l'extrémité de sortie 31 de la buse d'alimentation en lait 1 dans le port d'amenée de lait 10 du corps de moussage 2. La fente d'amenée d'air 8 s'étend sur une partie d'une surface externe de l'extrémité de sortie 31.

Lors du fonctionnement du dispositif de moussage de lait, la buse d'alimentation en lait 1 se trouve insérée dans le port d'amenée de lait 10 du corps de moussage 2, et la fente d'amenée d'air 8 reçoit de l'air par une extrémité amont 24. L'air parcourt la fente d'amenée d'air 8 depuis l'extrémité amont 24 vers une extrémité aval 25 de la fente 8, cette extrémité aval 25 débouchant sur un orifice d'injection d'air 9, lui-même relié fluidiquement au conduit de distribution de lait de la buse d'alimentation 1. L'extrémité amont de la fente 24 est plus proche de l'orifice de sortie 29 que l'extrémité aval de la fente 25. Ainsi, par « sens normal de passage de l'air dans la fente d'amenée d'air lors du fonctionnement du dispositif de moussage de lait », on entend une circulation de l'air depuis l'extrémité amont 24 de la fente 8 vers l'extrémité aval 25 de la fente 8, parallèlement à la direction D1 d'insertion de l'extrémité de sortie 31 de la buse d'alimentation en lait 1 dans le port d'amenée de lait 10, mais dans un sens opposé à l'insertion de l'extrémité de sortie 31 dans le port d'amenée de lait 10.

L'air, une fois qu'il a parcouru la fente d'amenée d'air 8 et s'est engouffré dans le conduit de distribution de lait via l'orifice d'injection d'air 9, est mélangé au lait provenant de la conduite d'amenée de lait 17 et s'écoulant selon la direction d'insertion D1.

La conduite d'amenée de lait 17 peut être raccordée à l'extrémité d'entrée 19. La conduite d'amenée de lait 17 peut notamment être fixée sur l'extrémité d'entrée 19 par interférence, une surface interne de la conduite d'amenée de lait 17 étant retenue sur une portion de retenue 20 non lisse d'une surface externe de l'extrémité d'entrée 19. La portion de retenue 20 non lisse peut par exemple présenter une forme dentelée.

Selon certains modes de réalisation, l'extrémité d'entrée 19 comprend, en amont de la portion de retenue 20 dans la direction d'insertion de la conduite d'amenée de lait 17 sur l'extrémité d'entrée 19 - qui est la même que la direction D1 d'insertion de l'extrémité de sortie 31 de la buse d'alimentation en lait 1 dans le port d'amenée de lait 10 du corps de moussage - une portion conique 21 dont la section augmente dans le sens d'insertion de sorte à faciliter le positionnement de la conduite d'amenée de lait 17 sur l'extrémité de retenue 19.

Outre la portion principale 6, la buse d'alimentation en lait 1 peut comprendre, entre l'extrémité d'entrée 19 et l'extrémité de sortie 31, une collerette 22 apte à former une butée, de sorte à définir une fin de course d'insertion de la conduite d'amenée de lait 17 sur l'extrémité d'entrée 19 de la buse d'alimentation en lait 1. La collerette permet également de définir une fin de course d'insertion de la buse d'alimentation en lait 1 dans le port d'amenée de lait 10.

De préférence, la portion principale 6 comprend un joint assurant une étanchéité entre la buse d'alimentation 1 et le port d'amenée de lait 10 lorsque la buse d'alimentation 1 est insérée dans le port d'amenée de lait 10. En variante, la collerette 22 permet une étanchéité de la connexion entre la buse d'alimentation 1 et le corps de moussage 2 une fois la buse d'alimentation 1 insérée dans le port d'amenée de lait 10. Toutefois, il est prévu selon certains modes de réalisation que l'étanchéité entre la buse d'alimentation 1 et le corps de moussage 2 soit conférée par un joint disposé sur la buse d'alimentation 1 ou dans le port d'amenée de lait 10, en combinaison ou en remplacement de l'étanchéité conférée par la collerette 22.

La fente 8 est apte à être alimentée en air via son extrémité amont 24 par un port d'amenée d'air 3 du corps de moussage 2 fluidiquement relié à l'extrémité amont 24.

Le corps de moussage 2 du dispositif de moussage de lait est représenté sur la figure 4. Il comprend le port d'amenée de lait 10 prévu pour recevoir la buse d'alimentation 1, le port d'amenée d'air 3, le port d'amenée de vapeur et/ou d'eau chaude 4 ainsi que la sortie de lait moussé 11.

Le corps de moussage 2 comprend en outre une nervure 12 disposée sur la surface interne du port d'amenée de lait 10. Lors d'une insertion de la buse d'alimentation en lait 1 dans le port d'amenée de lait 10, la nervure 12 vient s'insérer dans la fente d'amenée d'air 8. Lors d'un désengagement de la buse d'alimentation en lait 1 hors du port d'amenée de lait 10, la nervure 12 traverse la fente d'amenée d'air 8 en sens inverse. Ainsi, si du lait est resté dans la fente d'amenée d'air 8 après une utilisation du dispositif de moussage, et a séché, le passage de la nervure 12 dans la fente d'amenée d'air 8 lors d'une insertion de la buse d'alimentation 1 dans le port d'amenée de lait 10 (et, éventuellement, le désengagement de la buse d'alimentation 1 hors du port d'amenée de lait 10) permet de déloger le lait séché présent dans la fente d'amenée d'air 8 sans qu'aucune action de l'utilisateur ne soit nécessaire hormis l'insertion (et éventuellement le désengagement) qu'il effectuerait de toute façon lors d'un montage (et démontage) du dispositif de moussage.

Le port d'amenée de vapeur et/ou d'eau chaude 4 et la sortie de lait moussé 11 sont fluidiquement reliés par une conduite de moussage 26. Dans la position assemblée du dispositif de moussage dans la tête de distribution 13, la conduite de moussage 26 s'étend verticalement de sorte à permettre le passage du lait le plus efficacement possible jusqu'à la sortie de lait moussé 11 sous l'effet de la gravité.

Une chambre de moussage 5 s'étend dans la conduite de moussage 26, entre le port d'amenée de vapeur et/ou d'eau chaude 4 et la sortie de lait moussé 11. La chambre de moussage 5 est configurée pour permettre le moussage du lait provenant de la buse d'alimentation 1 par effet Venturi, grâce à la vapeur et/ou à l'eau chaude provenant du port d'amenée de vapeur et/ou d'eau chaude 4. À cet effet, le port d'amenée de lait 10 est fluidiquement relié à la conduite de moussage 26 via un orifice 27, notamment un orifice 27 qui débouche en amont de la chambre de moussage 5 selon une direction D2 d'écoulement de l'eau chaude/vapeur dans la conduite de moussage 26. Lorsque la buse d'alimentation 1 est en position montée dans le port d'amenée de lait 10, l'orifice de sortie 29 est ainsi directement relié à la conduite de moussage 26 via l'orifice 27.

La chambre de moussage 5 présente de préférence une forme conique permettant l'effet Venturi à l'origine du moussage du lait.

Selon un mode de réalisation non représenté sur les figures, le dispositif de moussage comprend un module de sortie pouvant être connecté au corps de moussage 2. Le module de sortie comprend deux buses de distribution de lait moussé, chaque buse de distribution de lait moussé étant adaptée pour être reliée fluidiquement à la sortie de lait moussée 11 de sorte à permettre la distribution de lait moussé provenant du corps de moussage 2 en deux positions distinctes.

Selon des modes de réalisation, la buse d'alimentation en lait 1 comprend, dans le prolongement de la fente d'amenée d'air 8 selon la direction d'insertion D1, entre l'extrémité aval 25 de la fente et l'extrémité d'entrée 19 de la buse 1, un logement 7 configuré pour permettre à la nervure 12 d'être reçue en position montée de la buse d'alimentation 1 dans le corps de moussage 2, c'est-à-dire en fin d'une course d'insertion de la buse de distribution 1 dans le port d'amenée de lait 10. L'orifice d'injection d'air 9 est ainsi disposé entre l'extrémité aval 25 de la fente et le logement 7, et est directement relié à la fois à la fente 8 et au logement 7.

L'épaisseur du logement 7 selon une direction définie par la circonférence de la portion principale 6 est supérieure à une épaisseur de la nervure 12, et de préférence supérieure à une épaisseur de la fente d'amenée d'air 8.

La profondeur du logement 7, définie selon une direction perpendiculaire à un axe principal de la buse d'alimentation 1, est supérieure à une profondeur de la nervure 12 selon cette même direction, et de préférence supérieure à une profondeur de la fente d'amenée d'air 8 selon cette même direction.

Le fait de prévoir des dimensions (épaisseur et profondeur) plus importantes pour le logement 7 que pour la fente d'amenée d'air 8 permet de prévoir une nervure 12 adaptée aux dimensions de la fente d'amenée d'air et permettant de déloger la majorité du lait séché présent dans la fente 8, tout en assurant un accès aisé de la nervure 12 au logement 7. Notamment, lorsqu'une épaisseur de la nervure 12 est sensiblement égale à une épaisseur de la fente d'amenée d'air 8, ou très légèrement inférieure à l'épaisseur de la fente d'amenée d'air 8 de sorte à ne pas entraver un coulissement de la nervure 12 dans la fente d'amenée d'air 8, l'utilisateur sent lors de ce coulissement un frottement entre la fente d'amenée d'air 8 et la nervure 12, ce frottement disparaissant une fois que la nervure 12 rejoint le logement 7 du fait des dimensions du logement 7 supérieures aux dimensions de la fente d'amenée d'air 8. Ceci permet une indication de fin de course d'insertion à l'utilisateur.

Avantageusement, la nervure 12 a une section (épaisseur x profondeur) sensiblement égale à la section de la fente d'amenée d'air 8.

De la même manière, la présence des frottements permet à l'utilisateur de savoir quand la nervure 12 entre dans la fente d'amenée d'air 8 lors d'un retrait de la nervure 12 hors du logement 7.

Le logement 7 est disposé du côté opposé de l'orifice d'injection d'air 9 selon la direction d'insertion D1 par rapport à la fente d'amenée d'air 8.

Selon certains modes de réalisation, le corps de moussage 2 comprend en outre un logement apte à recevoir un outil de nettoyage servant à nettoyer le conduit de distribution de lait de la buse d'alimentation en lait 1 et/ou la fente d'amenée d'air 7. Ceci permet à un utilisateur de nettoyer le conduit de distribution de lait, et de nettoyer la fente d'amenée d'air 8 y compris dans des zones qui pourraient être inaccessibles à la nervure 12 en fonction des géométries de la fente 8 et de la nervure 12.

## Revendications

1. Dispositif de moussage de lait, comprenant une buse d'alimentation en lait (1) et un corps de moussage (2), le corps de moussage (2) comprenant :
- un port d'amenée de vapeur et/ou d'eau chaude (4),
- un port d'amenée d'air (3), et
- un port d'amenée de lait (10), configuré pour recevoir la buse d'alimentation en lait (1), le port d'amenée d'air (3) débouchant sur une surface interne du port d'amenée de lait (10), la buse d'alimentation (1) en lait comprenant :
- une portion principale (6) définissant un conduit de distribution de lait, et
- une fente d'amenée d'air (8) s'étendant sur au moins une partie d'une surface externe de la portion principale (6), entre une extrémité amont (24) et une extrémité aval (25) selon un sens normal de passage de l'air dans la fente d'amenée d'air (8) lors du fonctionnement du dispositif de moussage de lait, la surface externe de la portion principale (6) comprenant un orifice d'injection d'air (9) dans le conduit de distribution de lait sur lequel débouche l'extrémité aval (25),
la surface interne du port d'amenée de lait (10) comprenant une nervure (12) configurée pour coulisser dans la fente d'amenée d'air (8), entre l'extrémité amont (24) et l'extrémité aval (25) lors d'une insertion ou d'un retrait de la buse d'alimentation en lait (1) du port d'amenée de lait (10), de sorte à déloger du lait séché présent dans la fente d'amenée d'air (8).

2. Dispositif de moussage de lait selon la revendication 1, dans lequel la surface externe de la portion principale (6) comprend en outre un logement (7) situé en aval de l'extrémité aval (25) et configuré pour recevoir la nervure (12) à la fin d'une course de coulissement de la nervure (12) dans la fente d'amenée d'air (8) lors de l'insertion de la buse d'alimentation en lait dans le port d'amenée de lait.

3. Dispositif de moussage de lait selon la revendication 2, dans lequel le logement (7) a une profondeur supérieure ou égale à une profondeur de la fente d'amenée d'air (8) et/ou le logement (7) a une épaisseur supérieure ou égale à une épaisseur de la fente d'amenée d'air (8).

4. Dispositif de moussage de lait selon la revendication 2 ou 3, dans lequel le logement (7) et la fente d'amenée d'air (8) sont situés de part et d'autre de l'orifice d'injection d'air (9).

5. Dispositif de moussage de lait selon l'une quelconque des revendications 2 à 4, dans lequel le logement (7) a une épaisseur supérieure ou égale à une épaisseur de la nervure (12) et/ou une profondeur supérieure ou égale à celle de la nervure (12).

6. Dispositif de moussage de lait selon l'une quelconque des revendications précédentes, dans lequel le port d'amenée de lait (10) est configuré pour recevoir la buse d'alimentation en lait (1) de manière étanche.

7. Dispositif de moussage de lait selon l'une quelconque des revendications précédentes, dans lequel le port d'amenée de vapeur et/ou d'eau chaude (4) est apte à être relié fluidiquement à une sortie de vapeur et/ou d'eau chaude d'un appareil de distribution de boisson, notamment d'une machine à café.

8. Dispositif de moussage de lait selon l'une quelconque des revendications précédentes, dans lequel le corps de moussage (2) comprend un logement apte à recevoir un outil de nettoyage configuré pour nettoyer le conduit de distribution de lait et/ou la fente d'amenée d'air (8).

9. Dispositif de moussage de lait selon l'une quelconque des revendications précédentes, dans lequel le corps de moussage (2) comprend :
- une chambre de moussage (5) reliée fluidiquement au port d'amenée de vapeur et/ou d'eau chaude (4) et au port d'amenée de lait (10), et
- une sortie de lait moussé (11),
un orifice de sortie (29) de la buse d'alimentation en lait (1) étant propre à déboucher dans la chambre de moussage (5) après connexion de la buse d'alimentation en lait (1) au port d'amenée de lait (10).

10. Dispositif de moussage de lait selon la revendication 9, lequel comprend un module de sortie propre à être connecté au corps de moussage (2), le module de sortie comprenant deux buses de distribution de lait moussé propre à être chacune reliée fluidiquement à la sortie de lait moussé (11).

11. Système de moussage de lait comprenant un dispositif de moussage de lait selon l'une quelconque des revendications précédentes et un pot (30) destiné à recevoir du lait, un volume interne du pot (30) étant propre à être fluidiquement relié à la buse d'alimentation en lait (1).

12. Appareil de distribution de boisson (15), comprenant une sortie de vapeur et/ou d'eau chaude et un dispositif de moussage de lait selon l'une quelconque des revendications 1 à 10, le port d'amenée de vapeur et/ou d'eau chaude (4) étant configuré pour être connecté à la sortie de vapeur et/ou d'eau chaude.

13. Appareil de distribution de boisson (15) selon la revendication 12, dans lequel l'appareil de distribution de boisson (15) comprend une tête de distribution (13) de boisson dans un récipient, la tête de distribution (13) de boisson formant un réceptacle dans lequel débouche la sortie de vapeur et/ou d'eau chaude, le dispositif de moussage de lait étant reçu dans le réceptacle lorsque le port d'amenée de vapeur et/ou d'eau chaude (4) est connecté à la sortie de vapeur et/ou d'eau chaude.

14. Appareil de distribution de boisson (15) selon la revendication 12 ou 13, dans lequel la buse d'alimentation en lait (1) est insérée dans le port d'amenée de lait (10) et comprend une entrée (23) reliée fluidiquement à un pot (30) destiné à recevoir du lait disposé en dehors d'un bâti de l'appareil de distribution de boisson (15).
